# EUROPEAN PATENT SPECIFICATION

(11) **EP 3 317 105 B1**
(45) Date of publication and mention of the grant of the patent: **21.05.2025**
(21) Application number: 16821739.6
(22) Date of filing: 01.07.2016
(51) Int. Cl.: B32B 37/22, B32B 3/08, B32B 3/14, B32B 3/18, B32B 3/22, B65H 5/06, E04C 2/34, B27D 1/06, B27N 3/00, B65G 59/06, B27H 1/00, B27M 3/00

(54) **METHOD OF MAKING A SHEET UNIT**
VERFAHREN ZUR HERSTELLUNG EINER BOGENEINHEIT
PROCÉDÉ DE FABRICATION D'UNE UNITÉ DE FEUILLE

(30) Priority: 03.07.2015 SE 1550963
(43) Date of publication of application: 09.05.2018
(73) Proprietor: Inter IKEA Systems B.V., 2616 LN Delft (NL)
(72) Inventor: CARLANDER, Rolf, 423 63 Torslanda (SE); ANDREASSON, Bengt, 423 53 Torslanda (SE); ANDREASSON, Tomas, 423 53 Torslanda (SE)
(74) Representative: Ström & Gulliksson AB
(86) International application number: PCT/SE2016/050677
(87) International publication number: WO 2017/007408

(56) References cited:
- FR-A1- 2 348 126
- US-A- 1 461 724
- US-A- 3 338 774
- US-A1- 2010 227 087
- US-B2- 8 999 094

## Description

### TECHNICAL FIELD

The present invention relates to a method of making a building element having two large faces. Such building elements may for example be used as parts of various pieces of furniture, such as book cases, wardrobes, table tops, chests of drawers, etc.

Herein, the term "sheet" is intended to include a long, and thin "web material", usually fibrous and stored and transported as rolls, but not limited there to, i.e. also rigid sheet material is included, and also such sheet material which is not stored on rolls but stored in other manners, for example stored in piles of sheets.

A preferred example of a method of folding over and pressing of sheet units to produce a low weight building element is disclosed in Swedish patent application No. SE 1550962-3, in the name of IKEA Supply AG.

### BACKGROUND ART

US 8,999,094 B2 (Pettersson et al.) discloses a method of and a machine for continuous manufacture of a composite hollow board material, *i.e.* a material including more than one sheet material with intermediate distance material. Such composite hollow board materials, compared to solid board materials or wood, provides a lightweight and relatively strong material having a first surface and a second surface, and between the first and second surfaces a plurality of spacing elements.

The disclosed method comprises providing material for spacing elements in the form of laths extending along the length of the composite hollow board material, e.g. to provide members of sufficient size for attaching screws to penetrate and be firmly anchored.

US 1,461,724 further discloses a machine for producing wall boards wherein a supply device including a conveyor has a horizontal portion for receiving laths and a downwardly inclined run for carrying the laths down beneath the fingers which transfer the laths over to an assembly roll.

US 2010/227087 describes a panel of wood having solid, outer layers and at least one supple inner layer with a lightweight foam material structure. The panel has at least one spacing block-shaped plug inserted between the outer layers.

### SUMMARY OF THE INVENTION

The object of the present invention is to speed-up and simplify at least one, preferably a plurality of the steps in the production of composite, preferably low weight, building elements. In particular the building elements formed according to the teachings of the present invention are useful for forming parts of pieces of furniture, as furniture building elements. For example the building elements formed could be used as table tops, parts of a book case, a wardrobe or a chest of drawers, etc. In many such pieces of furniture several building elements are to be attached to each other to form the book case, the chest of drawers, the wardrobe etc., or table legs need to be attached to a building element forming a table top. Efficient attachment is facilitated by the teachings of the current application.

In the method stated in the first paragraph above, this object is achieved in that according to the invention the method comprises:
- providing one or more sheets adapted to form a first and a second large face, respectively, at least one of the large faces carrying spacing elements for providing a desired thickness of the building element;
- providing a first supply device for supplying pad members;
- providing a first feeding wheel adapted for receiving pad members from the supply device; and
- rotating the first feeding wheel to fetch a first one of the pad members from the supply device in a first position, and,
- rotating the feeding wheel further to a second position in which the pad member is transferred to a predetermined position on the sheet, wherein
- in said predetermined position, the width of the pad member is less than half of the width of the sheet, preferably the width of said pad member not exceeding 15% of the width of said sheet.

Thereby, the placing of pad members may be carried out much faster than was possible heretofore, for example by using robots.

It is to be understood that a "pad member" refers to a discrete element to be applied and fixed onto a building element such as a sheet, and may be inserted and fastened between two faces of a building element.

According to a preferred embodiment the method includes providing a plurality of coaxially arranged feeding wheels and a plurality of supply devices simultaneously placing a plurality of pad members to predetermined positions on the sheet.

According to one embodiment the method includes placing pad members of two or more different sizes on the sheet unit, preferably the different sizes of pad members being placed in different locations on the pad. This may be preferable for example in applications when the final building element needs both pad members capable of handling relative high loads and pad members for which it is sufficient to handle relatively low loads.

The pad members are suitably made by providing a plurality of strips, gluing together a plurality of the strips to form a multilayer lath of predetermined dimensions, and cutting the lath in predetermined lengths to form the pad members. Hereby, the density and dimensions of the pad members can be controlled to provide the desired properties, *inter alia* the grip of screws therein.

For forwarding the pad members toward the first supply device, the method suitably further comprises providing a conveyor, placing a plurality of laths side by side on the conveyor, and cutting the laths crosswise to form a group of side by side lying pad members.

To continue forwarding the pad members toward the first buffer device, the method suitably further comprises providing a paternoster device having a plurality of receptor boxes, and transferring the group of side by side lying pad members from the conveyor to one of the receptor boxes in the paternoster device.

To initiate preparations for a simultaneous application of a plurality of pad members to the sheet, the method suitably further comprises repeating the cutting and pad member transferring steps to form and transfer more groups of side by side lying pad members to at least some empty receptor boxes in the paternoster device.

To proceed with the preparations for a simultaneous application of a plurality of pad members to the sheet, the method suitably further comprises providing a plurality of belt conveyors on top of one another beside the paternoster device, and discharging the groups of side by side lying pad members from each receptor box to an associated one of the belt conveyors.

A machine not part of the invention comprises:
- a first supply device for receiving, storing and delivering pad members;
- a first feeding wheel;
- a drive for rotating the feeding wheel to fetch a first one of the pad members from the first supply device and transfer it to a predetermined position on a moving sheet.

Thereby, the placing of pad members can be carried out much faster than was possible heretofore, for example by using robots.

The first feeding wheel may be arranged to feed pad members having a width being less than half of the width of the sheet. Thereby, the machine is adapted for producing building elements of low weight.

Preferably, the first feeding wheel is arranged for feeding pad members having a width not exceeding 15% of the width of said sheet. This provides for producing building elements of even lower weight.

Typically, the pad members have a length Lp of 2-25 cm. This provides for suitable mechanical strength and still a low weight of the building element.

The feeding wheel may include a plurality of peripherally arranged feeding spaces, to improve the ability to properly and quickly transfer a pad member from the first supply device to predetermined positions on a moving sheet.

It is preferred that a portion of the periphery of the feeding wheel of said first embodiment is enveloped by a feeding cover arranged to assist in withholding each pad within its feeding space from a first/inlet position to a second/outlet position. Thereby, the proper transfer of the pads is even safer.

To simplify the design, the feeding space is suitably designed to enable gravity to assist in feeding out the pad at said outlet position.

For the same reason, the first supply device is suitably positioned to enable gravity to assist in feeding in a pad at said first/inlet position into said feeding space.

The feeding wheel may include a plurality of peripherally arranged gripping means, to receive a pad member at said first/inlet position and withhold said pad member during transfer from the first supply device to said second/outlet position whereat it is positioned on a moving sheet. This embodiment provides the advantage of improved control of the positioning of the pad members, as the pad members are firmly gripped by the gripping means when moved from a first position/top position to a second position/bottom position of the feeding wheel. Hereby it is possible to fine-tune the position of the pad member at the point when it is applied onto the moving sheet. This may simplify rightful placement of the pad member at a predetermined position, e.g. between spacing strips on a board sheet.

To assist in feeding out the pad member at said outlet position, said second embodiment of the feeding wheel may include ejector members, one for each gripping means, arranged to be activated at the second/outlet position to eject the pad member and which may simultaneously to ejection apply a pressure onto said pad member to fix it onto the sheet, which sheet may be moving. Thus, said ejector member may have a dual function in that it both ejects the pad member and presses it onto the underlying material, such as said moving sheet.

To make it possible to position the pad member at an arbitrary position across the width of the sheet, the feeding wheel preferably is axially movable on the shaft.

Then, it is preferred that a movable holder engages the feeding cover of the axially movable feeding wheel to move it axially on the shaft to a predetermined position. Thereby, a mechanism for moving the feeding wheel axially can be simplified.

Each feeding wheel may have its own separate drive, but to simplify the design, it is preferred that a plurality of feeding wheels having a common drive.

Preferably, the machine further comprises a conveyor for transporting a plurality of board laths lying side by side, each of said laths including a plurality of the strips glued together to form a multilayer lath of predetermined dimensions, and a cutting device for cutting the laths crosswise to form a group of side by side lying pad members. Hereby, the density and dimensions of the pad members can be controlled to provide the desired properties, *inter alia* the grip of screws therein.

To continue forwarding the pad members toward the first buffer device, the machine further suitably comprises a paternoster device having a plurality of receptor boxes for receiving the group of side by side lying pad members from the cutting device, and a plurality of belt conveyors on top of one another beside the paternoster device for receiving the groups of side by side lying pad members from each receptor box.

Further, the machine preferably further comprises in addition to said first supply device, said first feeding wheel, said first glue applicator, and said first pressing member, an additional supply device, an additional feeding wheel, an additional glue applicator, and an additional pressing member for each belt conveyor, each one of all of the buffer devices being vertical and receiving pad members from an associated one of the belt conveyors.

The first feeding wheel may include at least one, and preferably a plurality, of peripherally arranged receiving space/-s each adapted for receiving a pad member. The receiving space/-s provides for a high accuracy in receiving and transferring the pad member to a desired position.

Preferably the first feeding wheel comprises 4-12 peripherally arranged receiving spaces. This provides for both high accuracy in transferring pad members and also provides for a high production rate.

Preferably the width of each receiving space of the feeding wheel is less than half of the width of the sheet. This provides for forming a light-weight building element, in which the pad members are placed where they are needed, without being overly large. More preferably the width of the receiving space is less than 15% of the width of the sheet. This provides for placing small, and thereby efficient, pad members, into the building element.

Preferably the width of each receiving space of the feeding wheel is less than 10 cm. This provides for placing very small pad members to obtain a highly efficient light weight building element.

### BRIEF DESCRIPTION OF THE DRAWINGS

In the following, the disclosure will be described in more detail with reference to preferred embodiments and the appended drawings.
- Fig. 1: is a perspective view of a portion of a first embodiment of a machine for making a sheet unit adapted to be folded over and pressed to produce a low weight building element having two large faces and shows that the machine in this embodiment comprises three buffer devices, three feeding wheels, three pressing members and three conveyors for feeding pad members to the buffer devices.
- Fig 1A: is a side view of a first embodiment of a low weight building element having two large faces.
- Fig. 2: is a perspective view showing a cutter for cross-cutting a plurality of side by side forwarded laths to form groups of pad members that are to be loaded in a paternoster.
- Fig. 3: is a perspective view showing the paternoster of Fig. 2 transferring the groups of pad members to three conveyors for forwarding to the three buffer devices as shown in Fig. 1.
- Fig. 4: is a perspective view of a left hand portion of the machine of Fig. 1 and shows a first buffer device, a first feeding wheel, and a first feeding cover with a first glue applicator and a first pressing member.
- Fig. 5: is an enlarged view of the machine components of Fig. 4 but shown in longitudinal section.
- Fig. 6: is a perspective view taken from another direction and showing in longitudinal section the three feeding wheels ready to deliver the pad members to the sheet.
- Fig. 7: is a perspective view of a portion of a second embodiment of a machine for producing a low weight building element having two large faces, and shows that the machine in this embodiment comprises three buffer devices, three feeding wheels, three pressing members and three conveyors for feeding pad members to the buffer devices.
- Fig. 8: is an enlarged side view of the machine components of Fig. 7 seen in longitudinal section, and showing a buffer device and a feeding wheel.
- Fig. 9: is a detailed view showing a top section of the feeding wheel of Fig. 8, whereat pad members are delivered to and received by gripping means of said feeding wheel.
- Fig. 10: is a detailed view showing a bottom section of the feeding wheel of Fig. 8, illustrating a pad member being released from the gripping means by means of activation of an ejector- and pressing member.
- Fig. 11: is yet another detailed view showing a top section of the feeding wheel and the components of a gripping means arranged to receive and withhold the pad members during delivery from the buffer device to the sheet.
- Fig. 12: is an enlarged view of the machine of Fig. 7, showing the components of an ejector- and pressing arrangement according to the second embodiment of the machine.

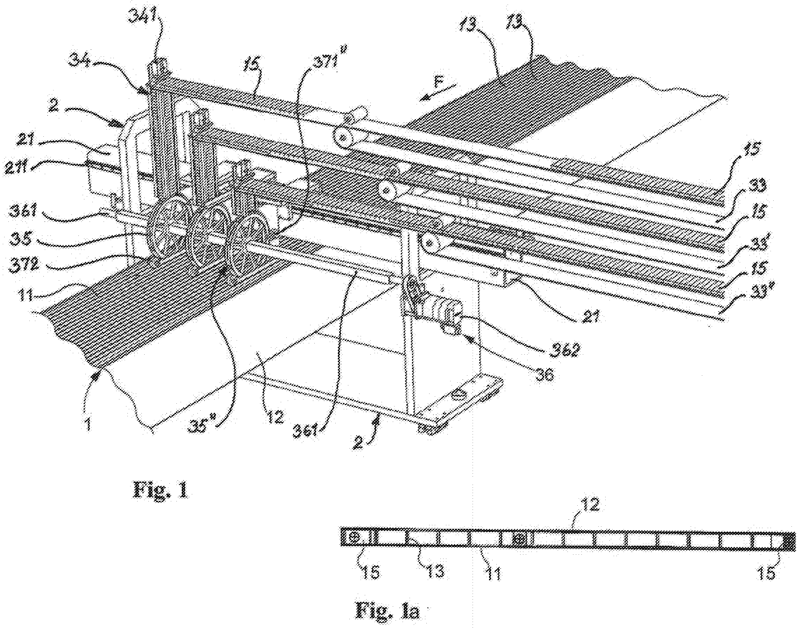

DETAILED DESCRIPTIONFig. 1 shows a machine for making a sheet unit adapted to be folded over and pressed to produce a building element, preferably a low weight building element, having two large faces. By "low weight building element" is meant a building element having a volume weight of less than 400 kg/m³. A sheet 1, suitably a long, thin, and flexible web material, usually fibrous and of such a length that it is stored and transported as rolls, is passed through the machine carried by a conveyor, not shown. Preferably, the elongate sheet 1 is a low weight, environmentally friendly and inexpensive material such as fibrous board having a thickness of, for example, about 0.5-3 millimeters, and a first 11 and a second 12 half of the sheet extend beside each other along the length of the sheet 1. The second half 12 is to be folded over the first one 11 and attached thereto by an adhesive to form a low weight building element 3, illustrated in Fig. 1a.

The first half 11 of the sheet 1 carries spacing elements for providing a desired thickness of the building element. Preferably, the spacing elements are board strips 13 having a thickness of about 2 mm and a width of about 14 to about 18 mm, the board strips 13 standing on their longitudinal edges on the first half 11 parallel to the length of the sheet 1 and extending to a height of about 14-18 mm from the surface of the first half 11. In the shown machine, the spacing board strips 13 are straight, but if desired they may alternatively have, e.g., a zigzag or wave shape. Another but less preferred alternative would be a honeycomb structure having its cells extending either parallel to the large faces of the building element or in the thickness direction of the building element. If desired, a properly dimensioned lath (not shown) may be provided along each longitudinal border of the first half 11 of the sheet 1.

The machine comprises:
- a first buffer device 34 for receiving, storing and delivering solid pad members 15;
- a first feeding wheel 35, 350;
- a drive 36 for rotating the feeding wheel 35 to fetch a first one of the pad members 15 from the first buffer device 34 and transfer it to a predetermined position on a moving sheet 1 carried by a conveyor (not shown).

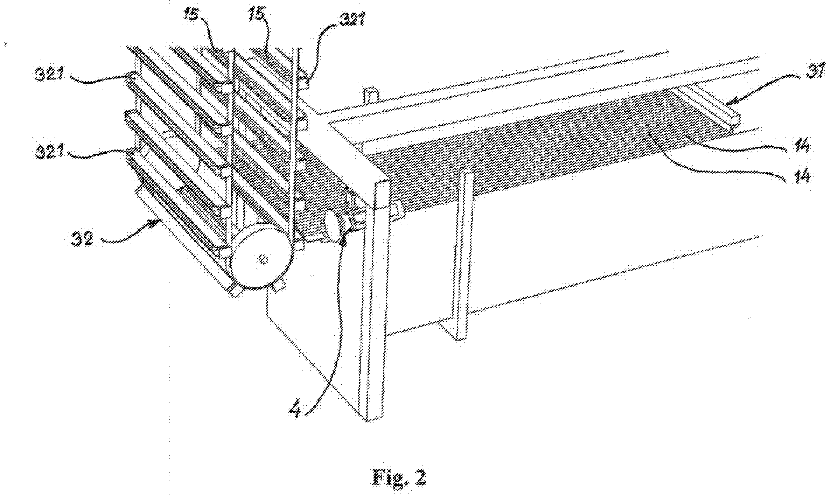

In addition, the machine shown in Fig. 1 includes a first pad conveyor 33 for feeding pad members 15 to the first buffer device 34. The solid pad members 15 may be of sufficient size to permit attachment screws to penetrate and be firmly anchored therein, and they are of a height that is equal to the width of the spacing strips 13 to work also as spacing elements in the building element. The spacing strips 13 are spaced apart a distance that is sufficient to permit a pad member 15 to be placed in the space between them. The pad members 15 and also the laths extending along the sides of the first half 11 of the sheet 1 can be made of a plurality of materials, if desired wood can be used, but preferably they are made by gluing together board strips and cutting in predetermined lengths as described in connection with Fig. 2 below.

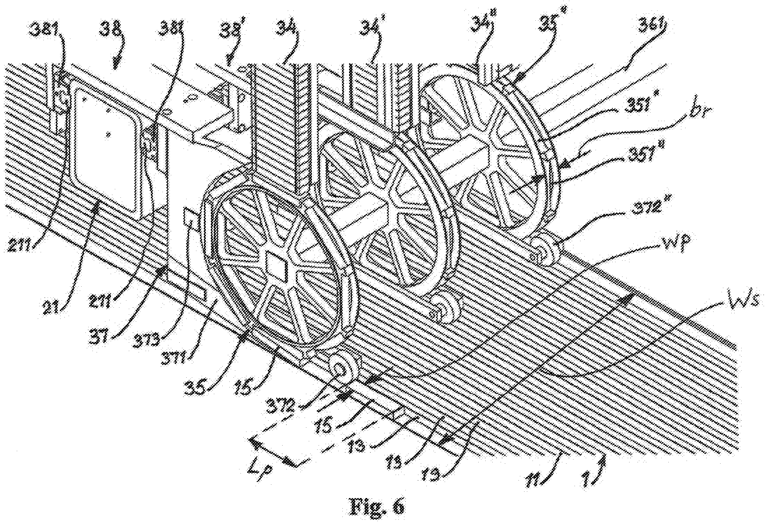

As illustrated in Fig. 6, the width wp of the pad members 15 is substantially smaller than the width Ws of the running/conveyed sheet 1, preferably the width wp of a pad member 15 is less than half of the width Ws of said sheet 1, preferably the width wp does not exceed 15% of the width Ws of said sheet 1, more preferably the width wp does not exceed 10% and even more preferably not 8% of said width Ws. Preferably, said pad members 15 have a rectangular shape with a length Lp and a width wp. The length Lp is typically 2-25 cm. Each pad member 15 is fed onto the running sheet 1 such that the pad member length Lp (i.e. its long side) is positioned parallel with respect to the conveying direction F (Fig. 1) of said sheet. As also seen in Fig. 6, the first feeding wheel 35 is adapted to the width wp of the pad members 15 to be transported, and thus the width br of a receiving space 351 of the wheel 35 substantially corresponds to the width wp of said pad members 15. Preferably the width br of each receiving space 351, as seen in a direction perpendicular to the travel direction F of the sheet 1, is less than half of the width Ws of the sheet 1, more preferably the width br of the receiving space 351 is less than 15% of the width Ws of the sheet 1. Preferably the width br of the receiving space 351 is less than 10 cm.

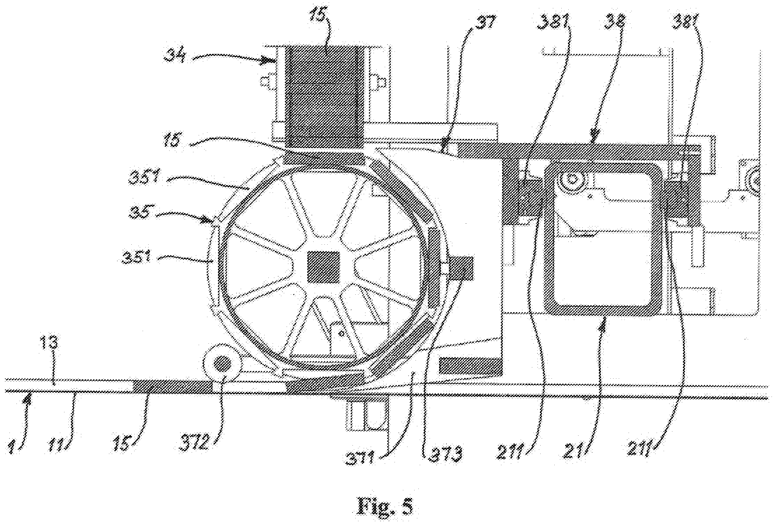

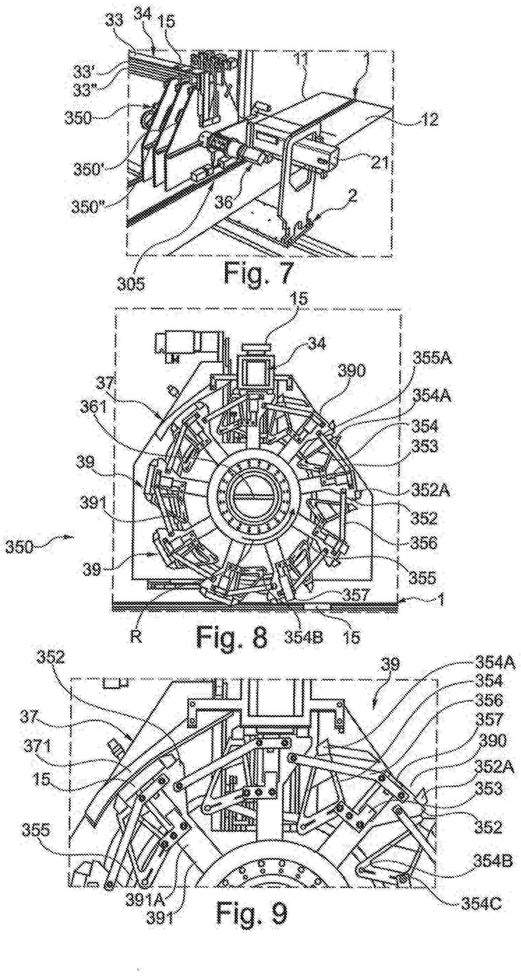

The machine further comprises a first glue applicator 371 (Fig. 5 and Fig. 9 respectively) for applying glue to said first one of the pad members 15 and/or to the predetermined position on the sheet 1 during the transfer of said first one of the pad members 15.

The first feeding wheel 35, 350 may be designed according to a first or a second embodiment respectively, where said first embodiment of a feeding wheel 35 is shown in Figs. 1, 4, 5 and 6, and said second embodiment of a feeding wheel 350 is shown in Figs. 7 - 12.

Now referring mainly to Figs. 1 - 6, said first embodiment of the feeding wheel 35 will be described.

In Fig. 1 is illustrated a machine for making a sheet unit comprising at least a first feeding wheel 35 according to a first embodiment. Said first feeding wheel 35 is associated with a first press member 372 (Fig. 5) for pressing said first one of the pad members 15 against the sheet 1 to fix said first one of the pad members 15 in the predetermined position on the sheet 1.

As best shown in Fig. 5, the machine suitably has a first feeding cover 37 that extends around nearly half of the circumference of the first feeding wheel 35 providing the outer part of a feeding channel 374 that provides room for accommodating and guiding the pads 15. The pad members 15 are carried by receiving spaces in the form of recesses 351 in the first feeding wheel 35 all the way from the first buffer device 34, which suitably is vertical, via the feeding channel 374 to the sheet 1. The first feeding cover 37 has a bottom portion, which includes the first glue applicator 371 and the attachment for arms 375 of a first press member 372. The shown first press member 372 is a roller carried by one or between two arms 375 (see also fig. 6) extending from the bottom portion of the first feeding cover 37.

Returning to Fig. 1, the machine further comprises a frame 2 for carrying the various components of the machine. The frame 2 includes a beam 21, preferably a box beam, extending across the width of the sheet 1. On two opposite and parallel sides thereof, the beam 21 has, as is best shown in Figs. 5 and 6, two guide rails 211. The first feeding cover 37 is provided with a first cover holder 38 having two rail followers 381, and the first cover holder 38 is movable along the length of the beam 21 to place the first feeding cover 37 at a desired position across the sheet 1.

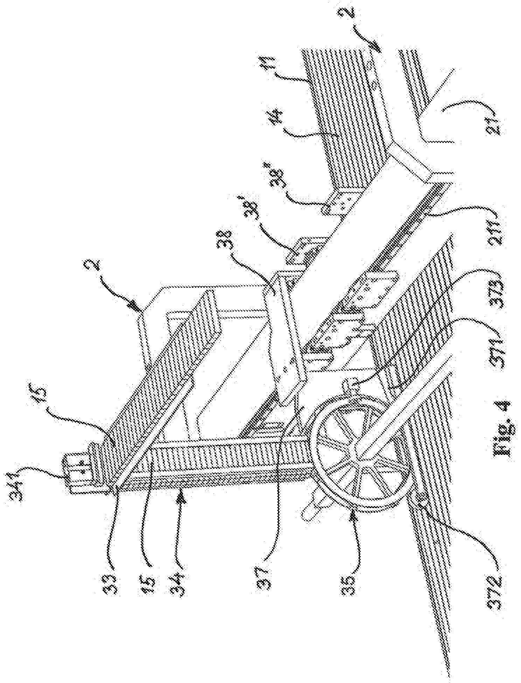

Returning to Fig. 1, the drive 36 includes a shaft 361 for carrying the first feeding wheel 35 and rotating it by a motor 362, the first feeding cover 37 has, as is best illustrated in Fig. 4, a respective guide member 373 on each side of the first feeding wheel 35 to move the first feeding wheel 35 along the shaft 361, and the first cover holder 38 carries also the first buffer device 34. Thereby, the first buffer device 34, the first feeding wheel 35, the first feeding cover 37 with the first glue applicator 371 and the first press member 372, and the first cover holder 38 are movable as an assembly in the cross direction of the sheet 1 to achieve a desired position for the pad member 15. In the drawings, the shaft 361 has a square cross-section to enable torque transmission and axial displacement of the feeding wheel 35, but if desired any keyed joint permitting axial displacement could be used. It would also be possible to have the first feeding wheel 35 rotatable on the shaft 361 and substitute a driving gear (not shown) for one of the guide members 373 on each side of the first feeding wheel 35.

The drawings show the machine having three such basically identical assemblies, thereby enabling, in this set-up, placing three pads 15 in parallel on the first half 11 of the sheet 1, but the machine may include another number of such assemblies, if desired. Since the components of the second and third assemblies are very similar to and perform the same functions as those of the first assembly, they have the same basic reference numeral as the components of the first assembly but with the addition of a prime symbol (') and a double prime symbol ("), respectively. As an example, in Fig. 1 the second pad conveyor 33' in the second assembly and the third pad conveyor 33" in the third assembly correspond to the first pad conveyor 33 in the first assembly.

Fig. 2 illustrates a step in the manufacturing of the pad members 15. Long lath- shaped board members 14 are supplied to a cutting device 4. There is a large number of laths 14 placed parallel next to one another on a supply arrangement 31 including a horizontal surface 310 and feeding device 311. Each lath 14 may be produced from a number of strips of board, e.g. strips having a thickness of 2 mm and a width of 14-18 mm like the spacing board strips 13. The strips are glued together, e.g. eight of them, to make up a lath 14 of desired width, *e.g.* 16 millimeters, i.e. 14 mm thick and 16 mm wide. The cutting device 4, shown as having a circular saw blade, cuts the laths 14 crosswise to form a group of side by side lying, rectangular pad members 15. Thus, it is possible and preferred to use the same kind of lightweight environmentally friendly and inexpensive material, e.g. 2 mm thick board, for the sheet 1 and the interconnecting strips 13 and also the pad members 15 to provide efficient stability and durability.

The group of pad members 15 is, after being cut from the laths 14, transferred to a receptor box 321 in a paternoster 32 having a plurality of such receptor boxes for transporting the group of pad members 15 vertically. Then the group of laths 14 is fed forward, and a new group of pad members 15 is cut by the cutting device 4 and transferred to the next receptor box 321 in the paternoster 32, and so forth.

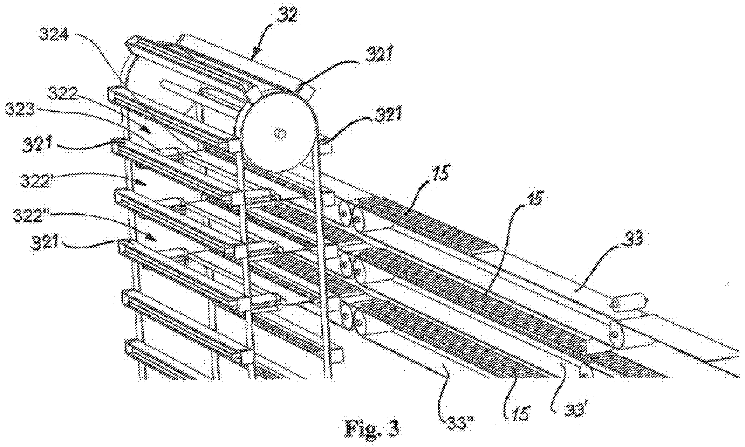

Fig 3 illustrates how the groups of pad members 15 in the receptor boxes 321 of the paternoster 32 are discharged to the three pad conveyors 33, 33', and 33". A respective pushing device 322, 322', 322", for example including compressed air cylinders 323 and a pushing bar 324, serves to push the pads from the respective receptor box 321 and onto the respective pad conveyor 33, 33', 33". As shown in Fig. 4, the first pad conveyor 33 forwards the group of side by side lying pad members 15 to the vertical first buffer device 34, where a pusher 341 arranged on top of the first buffer device 34 feeds one pad member 15 after the other down into the first buffer device 34. The first buffer device 34 has such internal dimensions in relation to the dimensions of the pad members 15, that pressure from the pusher 341 is required to discharge the pad members 15 at the bottom of the first buffer device 34 one at a time to the first feeding wheel 35 and into the respective recess 351 thereof.

As is best shown in Fig. 5, the first feeding wheel 35 preferably is a spoke wheel having around its circumference a plurality of feeding spaces or recesses 351 (also referred to as "receiving spaces"), each dimensioned to receive a single pad member 15. In the preferred embodiment shown in Fig. 5, there are eight recesses 351. The number of recesses 351 could be both higher and lower. Often it is preferred to have 4 to 12 recesses 351. The length and width of each recess 351 is slightly larger than the length and width of the respective pad member 15, but the depth of each recess 351 is preferably slightly smaller than the thickness of each of the pad members 15, e.g. to enable application of adhesive radially without contacting the feeding wheel 35, but also to make the arrangement less bulky. A pad member 15 is discharged into a recess 351 from the first buffer device 34 by activating the pusher 341 when the first feeding wheel 35 has one of its recesses 351 in a top position.

During the rotation of the first feeding wheel 35, the first feeding cover 37 retains the pad member 15 in the recess 351 until it is time to place the pad member 15 by gravity on the sheet 1. When the pad member 15 is forwarded, by means of the feeding wheel 35, past the first glue applicator 371 an amount of glue is applied to that side of the pad member 15 which is to face the first half 11 of the sheet 1. The wheel 35 then turns further and the pad member 15 falls out of the recess 351 and contacts the sheet 1, positioned such that the long side of said rectangular pad is positioned parallel with respect to the conveying direction F of said sheet. As the sheet 1 is forwarded further the first press member 372 presses the pad 15 towards the sheet 1 to ensure proper contact between the glue applied on the pad 15 and the sheet 1. As is best shown in Fig. 6, the pad members 15 are placed in the spaces between the spacing board strips 13.

Now referring mainly to Figs. 7 - 12, said second embodiment of the feeding wheel 350 will be described.

In Fig. 7 there is seen a perspective view of a machine for making a building element having two large faces, said machine having components corresponding to the machine shown in Fig. 1, i.e. comprising a first buffer device 34 for receiving, storing and delivering, in a similar manner as described hereinbefore with reference to Fig. 1, solid pad members 15; a first feeding wheel 350; and a drive 36 for rotating the feeding wheel 350 to fetch a first one of the pad members 15 from the first buffer device 34 and transfer it to a predetermined position on a moving sheet 1 carried by a conveyor. The machine of Fig. 7 comprises a first feeding wheel 350 according to a second embodiment which will be described in more detail hereinafter. In Fig. 7, said machine is shown to comprise a number of three feeding wheels, 350, 350', 350" with separation walls in between, however the skilled person understands that a larger or lesser number of feeding wheels is conceivable.

The two types of feeding wheel 35, 350 described herein, according to the first and second embodiments respectively, provide a similar function, i.e. transferring a pad member 15 from said buffer device 34 onto a predetermined position on a moving sheet 1, however the solution differs as will now become more clear when describing the feeding wheel 350 best shown in Figs. 8 - 11.

Fig. 8 shows a side view of a feeding wheel 350 according to the second embodiment, including a plurality of peripherally arranged gripping means 39 arranged on a wheel frame 391. In a corresponding manner as previously described for Figs. 1 - 6, the pad member 15 is delivered by means of gravity from the buffer device 34 at an upper, first/inlet position whereat the pad member 15 is received by one of the gripping means 39 of the feeding wheel 350. The gripping means 39 holds the pad member 15 during transfer to a lower, second/outlet position where the pad member 15 is released and positioned on a moving sheet 1. Said feeding wheel 350 includes ejector members 357, one for each gripping means 39, arranged to be activated at the second/outlet position to eject the pad member 15 and preferably simultaneously to ejection apply a pressure onto said pad member 15 to fix it onto the moving sheet 1.

The components and function of the gripping means 39 will now be more thoroughly described, referring mainly to Figs. 8 - 11.

In one example, each gripping means 39 comprises:
- a first gripper 352A attached onto a fixed first support member 352 of said wheel frame 391,
- an attachment bracket 353 for a pivotable jaw gripper 354,
- a second gripper 354A attached onto the pivotable jaw gripper 354, and
- a pair of support arms 356 provided at the outer portion of the respective wheel frame arm 391A for guiding the jaw gripper 354.

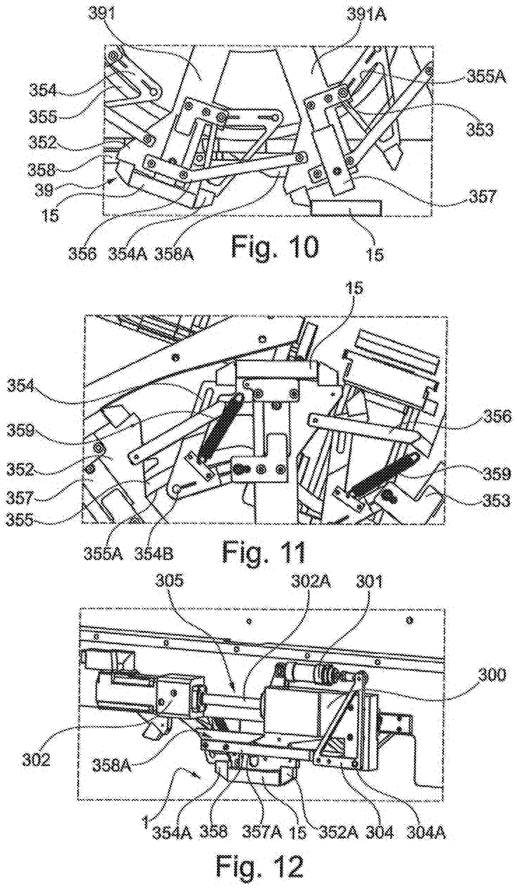

The space between said first gripper 352A and said second gripper 354A of a gripping means 39 is referred to as "receiving space" 390. In this embodiment there is nine receiving spaces 390 in the feeding wheel 350. The number of receiving spaces 390 could be both higher and lower. Often it is preferred to have 4 to 12 receiving spaces 390. Furthermore, each pivotable jaw gripper 354 comprises a spring 359 (see Fig. 11) that urges the jaw gripper 354 into a closed position, and a jaw guide wheel 354B that urges, as will be described hereinafter, the jaw gripper 354 into an open position, against the action of the spring 359 (for reasons of maintaining clarity of illustration the respective springs 359 are not illustrated in Figs. 8, 9 and 10). It is to be understood that by "closed position" means a position where the second gripper 354A is close enough to the first gripper 352A to firmly grip and hold a pad member 15 therebetween. Correspondingly, an "open position" refers to when said second gripper 354A has been moved/pivoted away from said first gripper 352A far enough for said pad member 15 to be released.

The machine is arranged with a first stationary cam ring 355 having a cam surface 355A arranged to guide the jaw guide wheel 354B of the pivotable jaw gripper 354 as the feeding wheel 350 rotates around its shaft 361. This means that the design/profile of the cam surface 355A of the cam ring 355 affects the gripping movement of the pivotable jaw gripper 354 during rotation of the wheel frame 391. The direction of rotation of the wheel frame 391 is indicated by an arrow R in Fig. 8. As can be seen e.g. in Fig. 8 and Fig. 11, the cam ring 355 is designed so that the pivotable jaw gripper 354 is free to assume a closed position by means of said spring 359 (Fig. 11) whilst moving from the first/inlet position to the second/outlet position (referred to as transferring path), and then the pivotable jaw gripper 354 is forced by the cam surface 355A interacting with the jaw guide wheel 354B to an open position whilst moving from said second/outlet position back to said first/inlet position (referred to as return path), as also illustrated in Fig. 10. This is achieved in that the cam surface 355A of the cam ring 355 is located further away from the center of the shaft 361 of the wheel 350 along the transferring path, and closer to the center of the shaft 361 along the return path, as shown in, e.g., Fig. 8. In other words, along said transferring path, the jaw guide wheel 354B is guided so that the jaw gripper 354 may be urged by the spring 359 to pivot around its pivot point 354C to a closed position, thereby holding the pad member 15 between the first and second grippers 352A, 354A, and in a corresponding manner, along the return path the jaw guide wheel 354B is guided by the cam surface 355A of the cam ring 355 so that the jaw gripper 354 is moved towards the wheel 350 shaft 361 center by pivoting around its pivot point 354C to adopt an open position, such that the receiving space 390 is open to receive a new pad member 15.

As previously indicated, each gripping means 39 is preferably associated with an ejector member 357 (see e.g. Fig. 10) which herein is depicted as an ejector beam 357 comprising an ejector guide wheel 357A (Fig. 12). The purpose of said ejector beam 357 is to assist in feeding out the pad member 15 at said second/outlet position onto the underlying surface, e.g. a moving/running sheet. Thus, when the grippers 352A, 354A holding a pad member 15 reaches the outlet position said ejector beam 357 is arranged to be activated to eject the pad member 15, and simultaneously to ejection apply a pressure onto said pad member 15 to fix it onto the moving sheet 1. Thus, said ejector member 357 has a dual function in that it both ejects the pad member 15 and also presses it onto the underlying material, such as said moving sheet 1. Said ejector member 357 may therefore also be referred to as "press member".

Activation of the ejector member 357 is actuated by means of an ejecting mechanism 305 arranged in connection to the feeding wheel 350 and installed at the second/outlet position. The perspective view of Fig. 7 shows the location of the ejecting mechanism 305 on the machine, and Fig. 12 illustrates the components of said ejecting mechanism in more detail.

The ejecting mechanism 305 comprises at least:
- -a support arm 358;
- -an ejector cam 358A connected to the support arm 358, said ejector cam 358A guiding the ejector guide wheel 357A;
- -an adjustable box member 300;
- -a resilient member 301 allowing for the support arm 358 to flex upwardly;
- -a servo device 302 that by means of rotating its threaded shaft 302A adjusts the position of the adjustable box member 300 and thereby also the position of the ejector cam 358A; and
- -a pivot bracket 304 that holds the support arm 358 and may pivot around a pivot point 304A resisted by said resilient member 301.

The transferring of a pad member 15 from said first/inlet position to said second/outlet position by means of a feeding wheel 350 according to a second embodiment will now be described.

Said pad members 15 are preferably manufactured as previously described in connection to Fig. 2, and thereafter transferred to the buffer device 34 via a paternoster 32 and conveyor 33 respectively, as also previously described in connection to Figs. 3 and 4.

Pad members 15 are discharged, one at a time, at the bottom of the first buffer device 34 by means of a pusher 341. As best seen in Figs. 8 and 9, the pad member 15 is discharged into the receiving space 390 formed between said first 352A and second grippers 354A of the gripping means 39. The gripping means 39 is here in an open position where the cam surface 355A keeps the jaw guide wheel 354B in a position where the jaw gripper 354 has pivoted around its pivot point 354C and the second gripper 354A has moved in a direction away from the first gripper 352A. A pad member 15 can hereby easily fit into the receiving space 390 when released from the buffer device 34. As the feeding wheel 350 turns further, the cam surface 355A of the cam ring 355 exhibits an outwardly oblique portion, increasing its radius, allowing for the jaw gripper 354 to be urged by the spring 359 towards a closed position (see e.g. Fig. 9), in which closed position the pad member 15 is firmly held between the first and second grippers 352A, 354A. A glue applicator 371 may apply glue onto the pad member 15 as it is moved along the transferring path. The pad member 15 is then transferred by the feeding wheel 350 to the second/outlet position whereat the pad member 15 is to be released onto the underlying, moving sheet 1. Referring now to Figs. 10 and 12, the ejecting mechanism 305 is arranged to actuate the ejector member 357 so that it pushes/ejects the pad member 15 out from the receiving space 390 and simultaneously presses the pad member 15 onto the underlying surface for firm affixation thereto. Ejection is achieved as follows. The gripping means 39 of the feeding wheel 350 is rotated along the transferring path. As it approaches the second/outlet position the ejector guide wheel 357A is engaged by the ejector cam 358A such that the ejector guide wheel 357A is gradually moved downwards (i.e. in a direction towards the underlying sheet 1). When the ejector guide wheel 357A moves, the ejector beam 357 moves along with it, resulting in that the pad member 15 is pushed by the ejector beam 357 out of the receiving space 390 onto the sheet 1. When the pad member 15 hits the sheet 1, the ejector beam 357 has reached its maximum ejected position. In case the ejector cam 358A still engages the guide wheel 357A to move downwards, the resilient member 301 of the ejecting mechanism 305 will allow for the support arm 358 holding the cam 358A to flex upwardly in order to let said guide wheel 357A to pass. Hereby, the ejecting mechanism 305 provides a tolerance for accepting different heights of the pad members.

After having passed by the second/outlet position, said gripping means 39 will adopt an open position in that the cam surface 355A of the cam ring 355 will gradually decrease its radius along the return path of the feeding wheel 350. The rectangular shaped pad members 15 may be applied onto the sheet 1 such that the long side of said pad member 15 is positioned parallel with respect to the conveying direction F of said sheet 1.

According to an alternative embodiment the glue could, instead of being applied to the pad 15, be applied directly onto the sheet 1, wherein glue is applied, by means of a glue applicator, upstream of the wheel 35 and at least in that predetermined position on the sheet 1 at which the pad 15 is to be placed. The pad 15 is then placed, by means of the wheel 35, in the glue of the sheet 1.

According to a further alternative embodiment glue is applied both to the pad 15, e.g. by means of the first glue applicator 371 as described hereinabove, and is also applied to the sheet 1, in a position upstream of the wheel 35 and at least in the predetermined position on the sheet 1, by means of a further glue applicator, wherein the pad 15 has glue applied on it when contacting the predetermined position on the sheet 1, where there is also glue, resulting in a glue-against-glue situation. This glue-against-glue situation may often give an extra efficient attachment of the pad 15 to the sheet 1.

Hereinbefore it has been described that pad members 15 made from glued-together laths 14 are mounted on the sheet 1. It will be appreciated that other pad members 15 may also be mounted using the above described technique. Examples of such of other pad members include pad members made from solid wood and made from chipboard. The pad members may also be made from other materials, such as metal and plastics.

Furthermore, the pad members 15 may have various sizes to fit the various applications. Still further, pad members 15 of two or more different sizes may be supplied to one and the same sheet 1, when there are various needs with respect to the pad member 15 size within one and the same building element 3.

Furthermore, the pad members 15 may have other functions than being support for connectors and devices being screwed into the light-weight construction element. For example the pad members 15 may include electronics of various types, including lamp sockets, LED-lamps and other electric fittings.

In accordance with the illustration of Fig. 1 there are a first half 11 and a second half 12 of a common sheet 1, wherein the second half 12 is folded over the first half 11 to form the low weight building element 3 illustrated in Fig. 1a. However, it will be appreciated that other embodiments are also possible. For example, separate first and second halves, which originate from separate elongate sheets, may be placed on top of each other, with pad members 15 and board members 13 in between the first and second halves, to form a low weight building element.

As is obvious from the above description with reference to the attached drawings, a purpose of the present invention is to provide a method that can produce construction members, *e.g.* wall members, shelf members, etc. for production of lightweight, environmentally friendly and cost efficient furniture, *e.g.* shelves, cupboards etc. A preferable embodiment is to use the same kind of lightweight environmentally friendly and inexpensive material, *e.g*. board, in several or even all of the components of the lightweight board and having interconnecting strips/reinforcements that provide efficient stability and durability. One preferred raw material to be used is board material, *e.g.* of a thickness of two millimeters. Further, in order to enable attachment means for screws etc. there are arranged pad members, *e.g.* solid members of sufficient size for attaching screws to penetrate and be firmly anchored. This preferred embodiment relates to the cost efficient production of such pad members and also an efficient and speedy machinery placing such pad members into desired positions within a construction member, for example where the pad members are intended for supporting attachment devices, such as screws, but also for speedy and reliable placing of other kinds of pad members, e.g. pad members including electronics and/or other functions.

### INDUSTRIAL APPLICABILITY

The method of the present invention is applicable in a cost efficient and speedy production of sheet units adapted to be folded over and pressed to produce low weight building elements having two large faces, which building elements are useful when making construction members, *e.g*. wall members, shelf members, etc. for production of low weight, environmentally friendly and cost efficient furniture, *e.g*. shelves, cupboards etc.

## Claims

1. A method of making a building element having two large faces, comprising:
- providing one or more sheets (1) adapted to form a first and a second large face (11, 12), respectively, at least one of the large faces (11) carrying spacing elements (13) for providing a desired thickness of the building element (3);
- providing a first supply device (34) for supplying pad members (15);
- providing a first feeding wheel (35, 350) adapted for receiving pad members (15) from the supply device (34); and
- rotating the first feeding wheel (35, 350) to fetch a first one of the pad members (15) from the supply device (34) in a first position, and,
- rotating the feeding wheel (35, 350) further to a second position in which the pad member (15) is transferred to a predetermined position on the sheet (1), wherein in said predetermined position, the width (wp) of the pad member (15) being less than half of the width (Ws) of the sheet (1), preferably the width (wp) of said pad member (15) not exceeding 15% of the width (Ws) of said sheet (1).

2. A method according to claim 1, further comprising applying glue to the pad member (15) and/or to the at least one of said at least one sheet (1) prior to transferring the pad member (15) to the predetermined position on the at least one sheet (1), preferably further comprising providing a first glue applicator (371) for, during the transfer of said first one of the pad members (15), applying glue from the glue applicator (371) to said first one of the pad members (15) and/or to the predetermined position on the sheet (1) and preferably further comprising providing a first press member (372, 357), and applying pressure to said first press member (372, 357) to press said first one of the pad members (15) against the sheet (1) to fix said first one of the pad members (15) in the predetermined position on the sheet (1).

3. A method according to any of the preceding claims, wherein the first feeding wheel (35, 350) comprises at least one receiving space (351, 390) adapted to receive a pad member (15), and wherein the pad member (15) rests in the receiving space (351, 390) while the feeding wheel (35, 350) rotates from said first position to said second position.

4. A method according to claim 3, wherein said at least one pad member (15) is held in place in the receiving space (351) by means of a first feeding cover (37) while the first feeding wheel (35) rotates from the first position to the second position, preferably the first feeding cover (37) is fixed in relation to the first feeding wheel (35).

5. A method according to claim 3, wherein said at least one pad member (15) is held in place in the receiving space (390) by gripping means (39), comprising a first gripper (352A) and a second gripper (354A), wherein a pad member (15) is arranged to be held between said first and second gripper while the first feeding wheel (350) rotates from the first position to the second position, wherein preferably one of said grippers (354A) is movable, more preferred pivotable.

6. A method according to any of the preceding claims, wherein the first feeding wheel (35, 350) rotates about a substantially horizontal axis, wherein preferably the first feeding wheel (35, 350) receives a pad member (15) in a receiving space (351, 390) when the latter is in its vertically highest position along the rotation of the wheel (35, 350), and wherein preferably the first feeding wheel (35, 350) transfers the pad member (15) from the receiving space (351, 390) to the sheet (1) when the receiving space (351, 390) is in its vertically lowest position.

7. A method according to any of the preceding claims, wherein the width (wp) of the pad member (15) does not exceed 10% of the width (Ws) of the sheet, preferably not exceeding 8% of said width (Ws) of the sheet (1) and wherein preferably a pusher (341) pushes a pad member (15) into a receiving space (351, 390) of the first feeding wheel (35, 350) when the feeding wheel (35, 350) is in the first position.

8. A method according to any of claims 5 - 7, wherein an ejector member (357) is arranged to eject a pad member (15) out from the receiving space (390) between the first- and second grippers (352A, 354A) when the receiving space (390) is in the second position, preferably simultaneously applying a pressure onto the pad member (15) against an underlying surface such as a sheet (1) to fix said pad member (15) in the predetermined position on the sheet (1).

9. A method according to any of the preceding claims, further comprising moving the first feeding wheel (35, 350) across the width of the sheet (1) until the first feeding wheel (35, 350) is located at a lateral position, as seen across the at least one sheet (1), which corresponds to a desired lateral position for the insert member (15).

10. A method as claimed in any of the preceding claims, further comprising making the pad members (15) by:
- providing a plurality of strips;
- gluing together a plurality of the strips to form a multilayer lath (14) of predetermined dimensions; and
- cutting the lath (14) in predetermined lengths to form the pad members (15), wherein the method preferably further includes
- placing a plurality of laths (14) side by side on a feeding device (31); and
- cutting the plurality of laths (14) crosswise to form a group of side by side lying pad members (15),
further preferably comprising:
- providing a paternoster device (32) having a plurality of receptor boxes (321); and
- transferring a group of side by side lying pad members (15) from the feeding device (31) to one of the receptor boxes (321) in the paternoster device (32),
the method further preferably comprising:
- repeating the cutting and pad member (15) transferring steps to form and transfer more groups of side by side lying pad members (15) to at least some empty receptor boxes (321) in the paternoster device (32).

11. A method as claimed in any of the preceding claims, further comprising:
- providing a plurality of coaxially arranged feeding wheels (35', 35", 350', 350") and a plurality of supply devices (34', 34"),
- wherein preferably said supply devices (34', 34") having different heights, and
- providing a plurality of belt conveyors (33, 33', 33") on top of one another each one associated to a respective supply device (34', 34"); and
- feeding pad members (15) from each associated one of the belt conveyors (33, 33', 33") to a respective supply device (34', 34"),
further preferably comprising:
- all of the supply devices (34, 34', 34") being vertical and storing at least insert members (15); and
- rotating the feeding wheels (35, 35', 35"; 350, 350', 350'') to fetch the pad members (15) from the supply devices (34, 34', 34") and transfer them to predetermined positions on the sheet (1).

## Patentansprüche

1. Verfahren zur Herstellung eines Bauelements mit zwei großen Flächen, umfassend:
- Bereitstellen einer oder mehrerer Platten (1), die geeignet sind, eine erste und eine zweite große Fläche (11, 12) zu bilden,
wobei jeweils mindestens eine der großen Flächen (11) Abstandselemente (13) trägt, um eine gewünschte Dicke des Bauelements (3) bereitzustellen;
- Bereitstellen einer ersten Zuführvorrichtung (34) zum Zuführen von Polsterelementen (15);
- Bereitstellen eines ersten Zuführrads (35, 350), das geeignet ist, Polsterelemente (15) von der Zuführvorrichtung (34) aufzunehmen;
- Drehen des ersten Zuführrads (35, 350), um ein erstes der Polsterelemente (15) von der Zuführvorrichtung (34) zu holen, in eine erste Position;
- Drehen des ersten Zuführrads (35, 350) weiter in eine zweite Position, in der das Polsterelement (15) an eine vorbestimmte Position auf der Platte (1) übertragen wird,
wobei in der vorbestimmten Position die Breite (wp) des Polsterelements (15) weniger als die Hälfte der Breite (ws) der Platte (1) beträgt;
wobei bevorzugt die Breite (wp) des Polsterelements (15) nicht größer als 15 % der Breite (ws) der Platte (1) ist.

2. Verfahren nach Anspruch 1, ferner umfassend das Aufbringen von Klebstoff auf das Polsterelement (15) und/oder auf die mindestens eine Platte (1) vor dem Übertragen des Polsterelements (15) an die vorbestimmte Position auf der mindestens einen Platte (1), vorzugsweise ferner umfassend
Bereitstellen eines ersten Klebstoffapplikators (371) zum, während der Übertragung des ersten der Polsterelemente (15), Aufbringen von Klebstoff von dem Klebstoffapplikator (371) auf das erste der Polsterelemente (15) und/oder an die vorbestimmte Position auf der Platte (1) und vorzugsweise ferner umfassend
Bereitstellen eines ersten Presselements (372, 357) und Aufbringen von Druck auf das erste Presselement (372, 357), um das erste der Polsterelemente (15) gegen die Platte (1) zu pressen, um das erste der Polsterelemente (15) an der vorbestimmten Position auf der Platte (1) zu fixieren.

3. Verfahren nach einem der vorhergehenden Ansprüche, wobei das erste Zuführrad (35, 350) mindestens einen Aufnahmeraum (351, 390) umfasst, der geeignet ist, ein Polsterelement (15) aufzunehmen, und wobei das Polsterelement (15) in dem Aufnahmeraum (351, 390) ruht, während das Zuführrad (35, 350) sich von der ersten Position in die zweite Position dreht.

4. Verfahren nach Anspruch 3, wobei das mindestens eine Polsterelement (15) an Ort und Stelle in dem Aufnahmeraum (351, 390) gehalten wird, während das erste Zuführrad (35, 350) sich von der ersten Position in die zweite Position dreht, und zwar mittels einer ersten Zuführabdeckung (37), während das erste Zuführrad (35) sich von der ersten Position in die zweite Position dreht, wobei vorzugsweise die erste Zuführabdeckung (37) in Bezug auf das erste Zuführrad (35) fixiert ist.

5. Verfahren nach Anspruch 3, wobei das mindestens eine Polsterelement (15) an Ort und Stelle in dem Aufnahmeraum (390) gehalten wird, während das erste Zuführrad (350) sich von der ersten Position in die zweite Position dreht, und zwar durch Greifmittel (39), die einen ersten Greifer (352A) und einen zweiten Greifer (354A) umfassen, wobei ein Polsterelement (15) so angeordnet ist, dass es zwischen dem ersten Greifer (352A) und dem zweiten Greifer (354A) gehalten wird, wobei vorzugsweise einer der Greifer (354A) beweglich ist, mehr bevorzugt schwenkbar ist.

6. Verfahren nach einem der vorhergehenden Ansprüche, wobei das erste Zuführrad (35, 350) sich um eine im Wesentlichen horizontale Achse dreht, wobei vorzugsweise das erste Zuführrad (35, 350) ein Polsterelement (15) in einem Aufnahmeraum (351, 390) aufnimmt, wenn sich letzterer in seiner vertikal höchsten Position entlang der Drehung des Rades (35, 350) befindet, und wobei vorzugsweise das erste Zuführrad (35, 350) das Polsterelement (15) von dem Aufnahmeraum (351, 390) zu der Platte (1) überträgt, wenn sich der Aufnahmeraum (351, 390) in seiner vertikal niedrigsten Position befindet.

7. Verfahren nach einem der vorhergehenden Ansprüche, wobei die Breite (wp) des Polsterelements (15) 10 % der Breite (ws) der Platte nicht überschreitet, vorzugsweise 8 % der Breite (ws) der Platte nicht überschreitet, wobei vorzugsweise ein Schieber (341) ein Polsterelement (15) in einen Aufnahmeraum (351, 390) des ersten Zuführrads (35, 350) schiebt, wenn das Zuführrad (35, 350) sich in der ersten Position befindet.

8. Verfahren nach einem der Ansprüche 5 bis 7, wobei ein Auswerferelement (357) so angeordnet ist, dass es ein Polsterelement (15) aus dem Aufnahmeraum (390) zwischen dem ersten und dem zweiten Greifer (352A, 354A) auswirft, wenn sich der Aufnahmeraum (390) in der zweiten Position befindet, wobei vorzugsweise gleichzeitig ein Druck auf das Polsterelement (15) gegen eine darunterliegende Fläche ausgeübt wird, wie beispielsweise eine Platte (1), um das Polsterelement (15) an der vorbestimmten Position auf der Platte (1) zu fixieren.

9. Verfahren nach einem der vorhergehenden Ansprüche, ferner umfassend das Bewegen des ersten Zuführrads (35, 350) über die Breite der Platte (1), bis das erste Zuführrad (35, 350) an einer seitlichen Position, gesehen quer über die mindestens eine Platte (1), angeordnet ist, die einer gewünschten seitlichen Position für das Einsatzelement (15) entspricht.

10. Verfahren nach einem der vorhergehenden Ansprüche, ferner umfassend das Herstellen der Polsterelemente (15) durch:
- Bereitstellen einer Vielzahl von Streifen;
- Zusammenkleben einer Vielzahl der Streifen, um eine mehrschichtige Latte (14) mit vorbestimmten Abmessungen zu bilden;
und
- Schneiden der Latte (14) in vorbestimmte Längen, um die Polsterelemente (15) zu bilden, wobei das Verfahren vorzugsweise ferner Folgendes beinhaltet:
- Platzieren einer Vielzahl von Latten (14) nebeneinander auf einer Zuführvorrichtung (31); und
- Schneiden der Vielzahl von Latten (14) quer, um eine Gruppe von nebeneinander liegenden Polsterelementen (15) zu bilden;
vorzugsweise ferner Folgendes umfassend:
- Bereitstellen einer Paternostervorrichtung (32) mit einer Vielzahl von Aufnahmekästen (321); und
- Übertragen einer Gruppe von nebeneinander liegenden Polsterelementen (15) von der Zuführvorrichtung (31) zu einem der Aufnahmekästen (321) in der Paternostervorrichtung (32),
wobei das Verfahren vorzugsweise ferner Folgendes beinhaltet:
- Wiederholen der Schritte des Schneidens und des Übertragens des Polsterelements (15), um mehr Gruppen von nebeneinander liegenden Polsterelementen (15) zu bilden und zu mindestens einigen leeren Aufnahmekästen (321) in der Paternostervorrichtung (32) zu überführen.

11. Verfahren nach einem der vorhergehenden Ansprüche, ferner umfassend:
- Bereitstellen einer Vielzahl von koaxial angeordneten Zuführrädern (35', 35", 350', 350") und einer Vielzahl von Zuführvorrichtungen (34', 34"),
- wobei die Zuführvorrichtungen (34', 34") vorzugsweise unterschiedliche Höhen aufweisen, und
- Bereitstellen einer Vielzahl von Bandförderern (33, 33', 33") übereinander, wobei jeder einer jeweiligen Zuführvorrichtung (34', 34") zugeordnet ist; und
- Zuführen von Polsterelementen (15) von jedem zugeordneten der Bandförderer (33, 33', 33") zu einer jeweiligen Zuführvorrichtung (34', 34"),
ferner vorzugsweise umfassend:
- alle Zuführvorrichtungen (34, 34', 34") sind vertikal und speichern zumindest Einsatzelemente (15); und
- Drehen der Zuführräder (35, 35', 35"; 350, 350', 350"), um die Polsterelemente (15) von den Zuführvorrichtungen (34, 34', 34") zu entnehmen und sie an vorbestimmte Positionen auf der Platte (1) zu übertragen.

## Revendications

1. Procédé de fabrication d'un élément de construction présentant deux grandes faces, comprenant :
- la fourniture d'une ou de plusieurs feuilles (1) conçues pour former une première et une seconde grande face (11, 12), respectivement, au moins une des grandes faces (11) portant des éléments d'espacement (13) destinés à fournir une épaisseur souhaitée de l'élément de construction (3) ;
- la fourniture d'un premier dispositif d'alimentation (34) pour l'alimentation en éléments de patin (15) ;
- la fourniture d'une première roue d'alimentation (35, 350) conçue pour recevoir des éléments de patin (15) provenant du dispositif d'alimentation (34) ; et
- la rotation de la première roue d'alimentation (35, 350) pour extraire un premier des éléments de patin (15) provenant du dispositif d'alimentation (34) dans une première position, et,
- la rotation de la roue d'alimentation (35, 350) davantage vers une seconde position dans laquelle l'élément de patin (15) est transféré vers une position prédéterminée sur la feuille (1), dans lequel dans ladite position prédéterminée, la largeur (wp) de l'élément de patin (15) est inférieure à une moitié de la largeur (Ws) de la feuille (1), de préférence la largeur (wp) dudit élément de patin (15) n'excède pas 15 % de la largeur (Ws) de ladite feuille (1).

2. Procédé selon la revendication 1, comprenant en outre l'application de colle sur l'élément de patin (15) et/ou sur l'au moins une desdites au moins une feuille (1) avant le transfert de l'élément de patin (15) dans la position prédéterminée sur l'au moins une feuille (1), de préférence comprenant en outre la fourniture d'un premier applicateur de colle (371) pour, pendant le transfert dudit premier des éléments de patin (15), appliquer de la colle depuis l'applicateur de colle (371) sur ledit premier des éléments de patin (15) et/ou sur la position prédéterminée sur la feuille (1) et comprenant de préférence en outre la fourniture d'un premier élément de presse (372, 357), et l'application d'une pression sur ledit premier élément de presse (372, 357) pour presser ledit premier des éléments de patin (15) contre la feuille (1) pour fixer ledit premier des éléments de patin (15) dans la position prédéterminée sur la feuille (1).

3. Procédé selon l'une quelconque des revendications précédentes, dans lequel la première roue d'alimentation (35, 350) comprend au moins un espace de réception (351, 390) conçu pour recevoir un élément de patin (15), et dans lequel l'élément de patin (15) repose dans l'espace de réception (351, 390) pendant que la roue d'alimentation (35, 350) tourne de ladite première position à ladite seconde position.

4. Procédé selon la revendication 3, dans lequel ledit au moins un élément de patin (15) est maintenu en place dans l'espace de réception (351) au moyen d'un premier couvercle d'alimentation (37) pendant que la première roue d'alimentation (35) tourne de la première position à la seconde position, de préférence le premier couvercle d'alimentation (37) est fixé par rapport à la première roue d'alimentation (35).

5. Procédé selon la revendication 3, dans lequel ledit au moins un élément de patin (15) est maintenu en place dans l'espace de réception (390) par des moyens de préhension (39), comprenant un premier préhenseur (352A) et un second préhenseur (354A), dans lequel un élément de patin (15) est agencé pour être maintenu entre lesdits premier et second préhenseurs pendant que la première roue d'alimentation (350) tourne de la première position à la seconde position, dans lequel de préférence un desdits préhenseurs (354A) est mobile, plus préférentiellement pivotant.

6. Procédé selon l'une quelconque des revendications précédentes, dans lequel la première roue d'alimentation (35, 350) tourne autour d'un axe sensiblement horizontal, dans lequel de préférence la première roue d'alimentation (35, 350) reçoit un élément de patin (15) dans un espace de réception (351, 390) lorsque ce dernier est dans sa position la plus haute verticalement le long de la rotation de la roue (35, 350), et dans lequel de préférence la première roue d'alimentation (35, 350) transfère l'élément de patin (15) de l'espace de réception (351, 390) à la feuille (1) lorsque l'espace de réception (351, 390) est dans sa position la plus basse verticalement.

7. Procédé selon l'une quelconque des revendications précédentes, dans lequel la largeur (wp) de l'élément de patin (15) n'excède pas 10 % de la largeur (Ws) de la feuille, de préférence n'excède pas 8 % de ladite largeur (Ws) de la feuille (1) et dans lequel de préférence un poussoir (341) pousse un élément de patin (15) dans un espace de réception (351, 390) de la première roue d'alimentation (35, 350) lorsque la roue d'alimentation (35, 350) est dans la première position.

8. Procédé selon l'une quelconque des revendications 5 à 7, dans lequel un élément éjecteur (357) est conçu pour éjecter un élément de patin (15) hors de l'espace de réception (390) entre les premier et second préhenseurs (352A, 354A) lorsque l'espace de réception (390) est dans la seconde position, de préférence en appliquant simultanément une pression sur l'élément de patin (15) contre une surface sous-jacente telle qu'une feuille (1) pour fixer ledit élément de patin (15) dans la position prédéterminée sur la feuille (1).

9. Procédé selon l'une quelconque des revendications précédentes, comprenant en outre le déplacement de la première roue d'alimentation (35, 350) sur la largeur de la feuille (1) jusqu'à ce que la première roue d'alimentation (35, 350) soit située au niveau d'une position latérale, telle que vue en travers de l'au moins une feuille (1), qui correspond à une position latérale souhaitée pour l'élément d'insertion (15).

10. Procédé selon l'une quelconque des revendications précédentes, comprenant en outre la fabrication des éléments de patin (15) par:
- la fourniture d'une pluralité de bandes ;
- le collage ensemble d'une pluralité des bandes pour former une latte multicouche (14) de dimensions prédéterminées ; et
- la découpe de la latte (14) à des longueurs prédéterminées pour former les éléments de patin (15), dans lequel le procédé comporte en outre de préférence
- le placement d'une pluralité de lattes (14) côte à côte sur un dispositif d'alimentation (31) ; et
- la découpe de la pluralité de lattes (14) transversalement pour former un groupe d'éléments de patin (15) allongés côte à côte, comprenant en outre de préférence :
- la fourniture d'un dispositif paternoster (32) présentant une pluralité de boîtiers récepteurs (321) ; et
- le transfert d'un groupe d'éléments de patin (15) allongés côte à côte du dispositif d'alimentation (31) vers l'un des boîtiers récepteurs (321) dans le dispositif paternoster (32), le procédé comprenant en outre de préférence :
- la répétition des étapes de découpe et de transfert de l'élément de patin (15) pour former et transférer davantage de groupes d'éléments de patin (15) allongés côte à côte vers au moins quelques boîtiers récepteurs vides (321) dans le dispositif paternoster (32).

11. Procédé selon l'une quelconque des revendications précédentes, comprenant en outre :
- la fourniture d'une pluralité de roues d'alimentation agencées coaxialement (35', 35", 350', 350") et d'une pluralité de dispositifs d'alimentation (34', 34"),
- dans lequel de préférence lesdits dispositifs d'alimentation (34', 34") présentent des hauteurs différentes, et
- la fourniture d'une pluralité de transporteurs à courroie (33, 33', 33'') les uns sur les autres, chacun étant associé à un dispositif d'alimentation respectif (34', 34") ; et
- l'alimentation d'un dispositif d'alimentation respectif (34', 34") en éléments de patin (15) depuis chacun des transporteurs à courroie (33, 33', 33") associés,
comprenant en outre de préférence :
- tous les dispositifs d'alimentation (34, 34', 34") qui sont verticaux et stockent au moins des éléments d'insertion (15) ; et
- la rotation des roues d'alimentation (35, 35', 35 ; 350, 350', 350'') pour extraire les éléments de patin (15) des dispositifs d'alimentation (34, 34', 34") et les transférer vers des positions prédéterminées sur la feuille (1).
